Europäisches Patentamt

European Patent Office

Office européen des brevets

(11) Publication number: **0 288 629**
**A1**

# EUROPEAN PATENT APPLICATION

(21) Application number: **87303920.0**

(51) Int. Cl.⁴: **G06F 15/72**

(22) Date of filing: **30.04.87**

(43) Date of publication of application:
**02.11.88 Bulletin 88/44**

(84) Designated Contracting States:
**DE FR GB IT**

(71) Applicant: **International Business Machines
Corporation
Old Orchard Road
Armonk, N.Y. 10504(US)**

(72) Inventor: **Butler, Nicolas David
52 Stapleford Close Woodley
Romsey Hampshire, S051 7HU(GB)**
Inventor: **Gay, Adrian Charles
29 Fareham Park Road Fareham
Hampshire, PO15 6LE(GB)**

(74) Representative: **Blake, John et al
IBM United Kingdom Limited Intellectual
Property Department Hursley Park
Winchester Hampshire SO21 2JN(GB)**

(54) Gouraud shading on graphics display apparatus.

(57) A Gouraud shading technique for a raster-scanned graphics display apparatus in which a polygon to be shaded is regarded as a 2 dimensional (X,Y) representation in 3 dimensional (X,Y,Intensity) space whereby the intensity gradient along any scan line is calculated and is then used to compute the intensity of each pel on this and the other scan lines constituting the polygon.

Preferably only the intensities of polygon edge (pels) on the leading (or trailing) edge(s) of the polygon are calculated before the stored intensity gradient is used to compute the scan line pel intensities including the trailing (or leading) edge(s) of the polygon.

## GOURAUD SHADING ON GRAPHICS DISPLAY APPARATUS

This invention relates to a method of and apparatus for generating shading on a raster-scanned graphics display device.

Over the last several years, images displayed on visual display units connected to data processing apparatus have become increasingly sophisticated. In an attempt to add realism and 3D effects to graphical images, shading is used. As is pointed out in IBM Technical Disclosure Bulletin, February 1981, pages 3996 to 4005, there are two basic approaches to shading. In one approach, mainly used for curved surfaces, the intensity (for each colour) for all points on the surface is calculated. This requires substantial processing power and is relatively slow compared with the other basic technique in which the intensity is calculated for sample points with the intensity for intermediate points being interpolated (for each colour). This latter approach is used for surfaces constructed of planar polygons. The use of smooth shading with flat polygonal surfaces can result in a reasonable and acceptable approximation of a curved surface.

A widely used smooth shading technique is that known as Gouraud shading described in IEEE Transactions on Computers, Vol C-20, No 6, June 1971 at pages 623 to 629. Briefly, in Gouraud shading, the intensities (for each colour) at the vertices of the polygons are computed and the start and end intensities of each raster scan line forming the polygon are interpolated from the computed vertex intensities. The individual picture element (pel or pixel) intensities for each scan line are then interpolated from the start and end intensities for that scan line.

In known graphical display apparatus, interpolation techniques are used for both the polygon edge pel intensities and the scan line pel intensities and although this technique is faster than the aforementioned technique in which the intensity is calculated for each point, it still requires a significant amount of processing power.

An object of the invention is to provide a more efficient Gouraud shading technique which will allow either a significant improvement in the image plotting efficiency or the use of less powerful (and cheaper) data processors.

According to one aspect of the invention, a method of providing Gouraud shading in a polygon to be displayed on a raster-scanned graphics display apparatus comprises calculating the intensity for pels along edges of the polygon from the intensities of the vertices of the polygon, calculating the intensity gradient for any one of the scan lines constituting the displayed polygon, storing the calculated intensity gradient, and thereafter using the stored intensity gradient for calculating the intensity of pels on this and other scan lines by adding the stored gradient to the edge pel intensities.

According to a second aspect of the invention, apparatus for displaying a Gouraud shaded polygon on a raster-scanned graphics display device having an all-points-addressable refresh buffer for containing picture information, comprises means for calculating the intensities of pels lying on edges of the polygon and for loading such calculated edge pel intensity information within said buffer, and means for calculating the intensities of pels lying on scan lines defining said polygon and for storing said calculated scan line pel intensity information within said buffer, characterised in that said scan line pel intensity calculating means includes means for calculating the intensity gradient along one of said scan lines and for storing said calculated intensity gradient and means for using the stored intensity gradient to calculate the scan line pel intensities for other scan lines.

The invention stems from the recognition that the normally 2-dimensional projection of the polygon (the intensities of whose vertices have already been calculated by any convenient technique) can be considered to be a plane in 3-dimensional space (X, Y and Intensity) and the fact that the gradient of a plane is constant in any particular direction. Thus the intensity gradient along each scan line must be constant as the scan lines are parallel and needs, therefore, only be calculated once and then applied to each scan line intensity interpolation.

The invention thus eliminates the need for set up for each scan line intensity interpolation, significantly improving the performance of the shading process. For example, given a four sided polygon spanning 100 scan lines, 5 or fewer interpolation set-ups are required instead of the normal 104. In general terms, the minimum saving in interpolation set ups is $(N+M)-(M+1) = N-1$ where M = number of sides of the polygon and N = number of scan lines. The higher the scanning resolution and the higher the number of polygonal facets used to represent the curved surface, the larger saving in interpolation set ups for a particular displayed image.

As will become evident later, in fact there is only a need to have interpolation set ups for leading edges of the polygon (or, alternatively, the trailing edges and then interpolate backwards).

The invention will now be described, by way of example, with reference to the accompanying drawings, in which:-

Figure 1 shows a polygon and indicates how shading is accomplished by means of the Gouraud technique;

Figure 2 shows the calculated intensities for a sample polygon and serves to illustrate how the resulting intensity slope of the scan lines is constant;

Figure 3 shows how the intensity slope can be calculated for a polygon having N vertices; and

Figure 4 illustrates how the invention may be implemented on a microprocessor-controlled workstation.

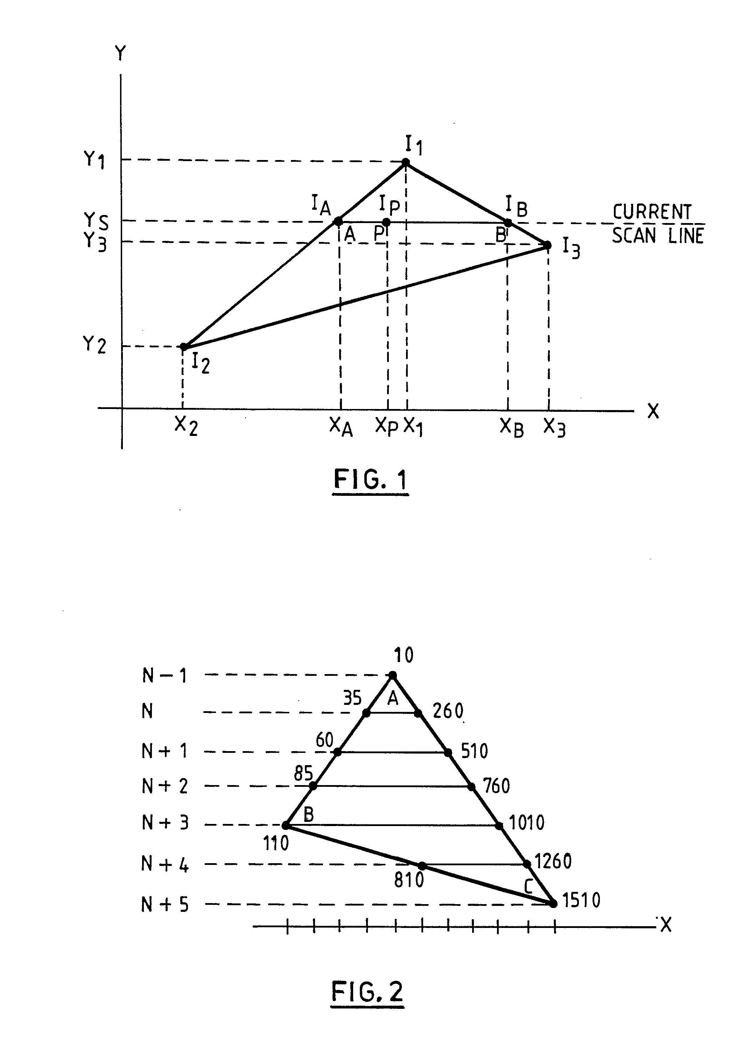

Figure 1 shows a 2D projection of a 3D polygon to be Gouraud shaded. The intensities at the vertices $X_1Y_1$, $X_2Y_2$ and $X_3Y_3$ are, respectively, $I_1$, $I_2$ and $I_3$. By interpolation, the intensities $I_A$ and $I_B$ at the points A and B respectively of the current scan line $Y_S$ are given by:-

$$I_A = I_1 (Y_S-Y_2)/(Y_1-Y_2) + I_2(Y_1-Y_S)/(Y_1-Y_2)$$

and $I_B = I_1 (Y_S-Y_3)/(Y_1-Y_3) + I_3(Y_1-Y_S)/(Y_1-Y_3)$

The intensities of the pixels along the scan line $Y_S$ are interpolated from the edge intensities $I_A$ and $I_B$. The intensity at point P is:

$$I_P = I_A (X_B-X_P)/(X_B-X_A) + I_B(X_P-X_A)/(X_B-X_A).$$

Although the calculations are in the above form, if the intensity slope along the edges and along each scan line is calculated and held to sufficient precision, then each pel intensity can be calculated by a simple addition.

Thus, for each edge point:-

Set up
$\Delta I_A = (I_2-I_1)/(Y_2-Y_1)$
$I_A = I_1$
$\Delta I_B = (I_3-I_1)/(Y_3-Y_1)$
$I_B = I_1$

Calculation per edge pel
$I_A = I_A + \Delta I_A$
$I_B = I_B + \Delta I_B$

For each scan line:

Set up
$\Delta I_S = (I_B-I_A)/(X_B-X_A)$
$I_P = I_A$

Calculation per scan line pel
$I_P = I_P + \Delta I_P$

This is how Gouraud shading is normally implemented.

The present invention is derived from the recognition that by using a property of 3-dimensional planes, the slope calculation need not be calculated for every scan line. In fact, as indicated above, the intensity slope need only be calculated once per polygon. Note that the intensity of each pel at the beginning of each scan line must still be interpolated from the vertex intensities. The invention relies upon the fact that if the 2D projection of the 3D polygon in X,Y space is considered to be a plane in 3D space (X, Y, Intensity), then the gradient of the plane is constant in any particular direction. The intensity gradient along each scan line will be a constant as they are parallel.

Figure 2 shows the calculated intensities for an example polygon having vertices A, B and C with intensities 10, 110 and 1510 respectively. Along the edge AB there is an intensity gradient of 25, along the edge BC there is an intensity gradient of 700, and along edge AC there is an intensity gradient of 250. The intensity gradients along the scan lines are (260-35)/2 = 112.5 for line N, (510-60)/4 = 112.5 for line NM, 675/6 = 112.5 for line N+2 etc. Thus the intensity gradient along each scan line is a constant 112.5.

The constant scan line intensity slope of the polygon can be calculated in a number of ways including the following examples.

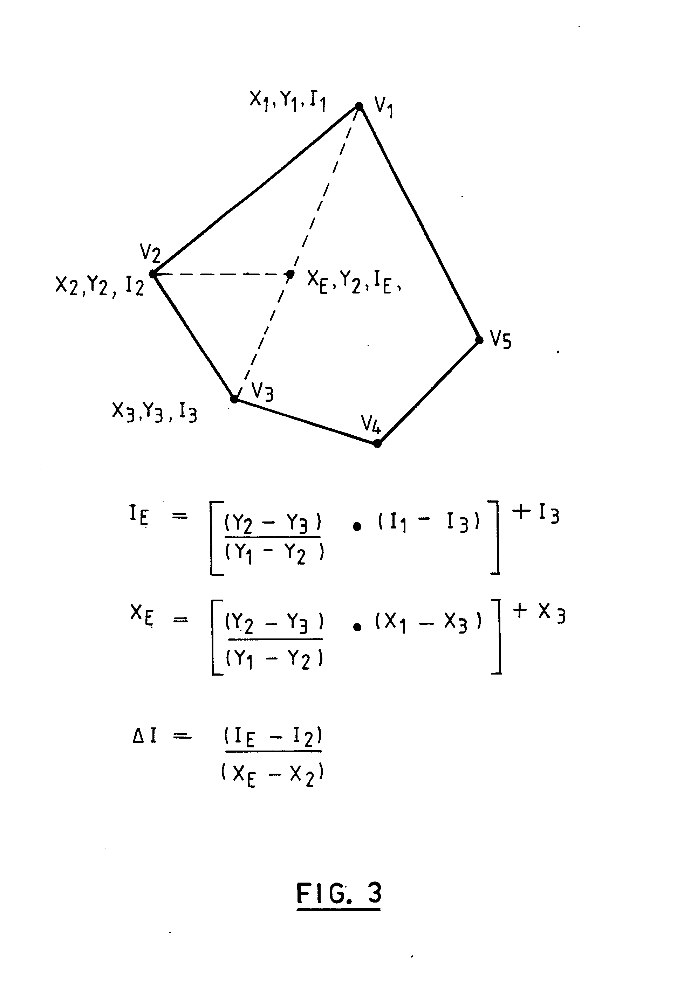

1. Given an N-vertex polygon, only 3 of the vertices are required to define a plane. Any three in sequential order define a triangular portion of the plane, see Figure 3, from which the coordinators $X_E$, $Y_E$, $I_E$ of a line in the plane parallel to the X axis. The gradient can be calculated from the values of X and I.

2. If a polygon processing scheme is used such as is described in British Patent Application No 8627552 (filed 18 November 1986) [Docket UK9-86-012] in which edge interpolation data (X and I) are built up in a table to avoid searching for a starting vertex, then as soon as a pair of scan line intersections are found, the polygon intensity gradient is calculated from the two intersection X and I coordinates of the first pair found only.

There is no need to interpolate the intensities of pels on trailing edges of the polygon since these will be derived from the intensities of the leading edge to which are added the scan line intensity variations. (Alternatively the trailing edge intensities can be interpolated not the leading edge.)

For each polygon:-

Set up

$\Delta I_S$    Calculated by one of the above methods (or any other convenient method)

For each edge pair:-

Set up

$\Delta I_A = (I_2-I_1)/(Y_2-Y_1)$

$I_A = I_1$

$\Delta I_B = (I_3-I_1)/(Y_3-Y_1)$

$I_B = I_1$

For each scan line:-

Set up

$I_P = I_A$

Calculation per scan line pel

$I_P = I_P + \Delta I_S$

Use of the invention results in a significant performance improvement. As will be seen from the above, far fewer interpolator set ups are required. As each calculation of the intensity gradient requires a division, one might anticipate improvements of the order of a factor of 2 where processors are used which have a reasonable divide instruction: where there is only a slow divide instruction, one might anticipate a performance improvement of up to a factor of 10.

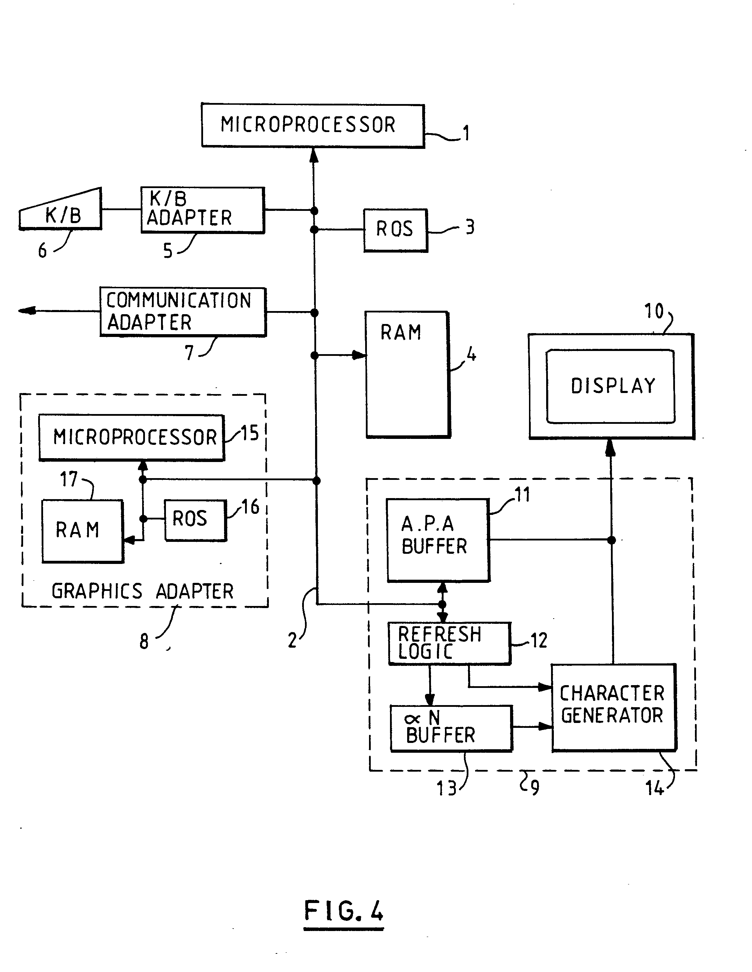

Figure 4 shows a microprocessor-controlled workstation in which the invention may be implemented. Such workstations are well known and include, for example, the IBM Personal Computer, IBM Personal Computer XT, IBM Personal Computer AT and IBM Personal System/2. Such workstations include a microprocessor 1 having a system bus 2 to which are connected read only storage (ROS) 3 for containing control code, a read/write random access memory (RAM) 4 for containing additional code and data, a keyboard adapter 5 serving as an interface to a keyboard 6, a communications adapter 7 by means of which the workstation can communicate with a remote data processor (not shown), a graphics adapter 8 whose purpose will be described below, and a display adapter 9 for allowing data to be displayed on a display device 10. As is well known, other input/output (I/O) devices such as printers, plotters, tablets, mice and additional storage devices can also be connected to the system bus 2.

As is shown in Figure 4, the display adapter 9 includes an all-points-addressable buffer 11 for containing a bit representation of an image to be displayed on the display device 10 and refresh logic 12 which periodically reads picture information from the buffer 11 to refresh the display device 10, normally a raster-scanned cathode ray tube (CRT) device. The buffer 11 can contain all data to be displayed on the device or alternatively, a separate coded alphanumeric buffer 13 can be provided for storing alphanumeric data, the actual bit patterns for the alphanumeric data being stored in a character generator 14 in well known fashion: the buffer 11 would then be used mainly for graphical non-alphanumeric images.

In theory, picture information, created at a remote data processor or locally under control of the microprocessor 1, can be loaded into the APA buffer 11 and/or the alphanumeric buffer 13 under control of the microprocessor 1. In practice however, this would have a serious impact on the performance of the workstation whilst displaying complex images on the display device 10. To this end the graphics adapter 8 is provided which relieves the microprocessor 1 of much of the graphics processing activity. The microprocessor 1 sends higher-level graphic commands to the graphics adapter 8 which responds by generating the actual picture information for loading into the APA buffer 11. The buffer 11, would consist of a number of planes, one for each colour, and also at least one attribute plane.

The adapter 8 may be purpose built hard-wired logic or, preferably as shown in Figure 4, it is constituted by an additional microprocessor 15 having its own read only storage (ROS) for control code and read/write random access memory (RAM) 17 for data and additional code. Thus, after calculating the intensity gradient $\Delta I_S$, the microprocessor 15 would store the value together with the calculated start scan line intensities in RAM 17 for use in calculating the individual scan line pel intensities for storage in buffer 11.

The following flow-chart, in the form of a table, summarises the invention in such a manner as to allow any competent logic designer to design a hard-wired graphics processor or a programmer to write control code for a programmed graphics processor. Of course, it will also be evident that the graphics adapter 8 could be constituted by a combination of hard-wired logic and microcode-controlled processor:

TABLE 1

1. Calculate and store the intensities, for each colour, of the vertices of the polygon to be Gouraud shaded.

2. Interpolate from the results of step 1 and store, for each colour, the intensity of each pel on each leading edge and/or each trailing edge of the polygon.

3. From the results of steps 1 and 2, calculate the intensity gradient (for each colour) along any scan line and store.

4. From the results of steps 2 and 3, calculate (by addition) the intensities (for each colour) of the pels lying on each scan line and store.

5. Use the stored results of steps 1, 2 and 4 to display the Gouraud-shaded polygon.

What has been described is a technique for Gouraud shading of polygons in which it is recognised that the intensity gradient (for each colour) in any particular direction is a constant and therefore need only be calculated once. Implementation of the invention can be by any convenient method but the invention gives a significant performance improvement over conventional Gouraud shading techniques where the intensity gradient is calculated for each scan line for each colour as well as for each edge of the polygon to be shaded.

## Claims

1. A method of providing Gouraud shading in a polygon to be displayed on a raster-scanned graphics display apparatus comprising calculating the intensity for pels along edges of the polygon from the intensities of the vertices of the polygon, calculating the intensity gradient for any one of the scan lines constituting the displayed polygon, storing the calculated intensity gradient, and thereafter using the stored intensity gradient for calculating the intensity of pels on this and other scan lines by adding the stored gradient to the edge pel intensities.

2. A method as claimed in claim 1, in which only the intensities of pels on leading edges or trailing edges of the polygon are calculated.

3. A method as claimed in either preceding claim, in which the intensity gradient for the scan lines is calculated from the intensity and coordinates of a pair of spaced edge pels lying on the same scan line.

4. A method as claimed in either claim 1 or claim 2, in which the intensity gradient for the scan lines is calculated from the intensities and coordinates of any three vertices of the polygon.

5. A method as claimed in claim 4, in which the intensity gradient for the scan lines is calculated from the ordinates and intensities of the left-most vertex of the polygon and the intersection of the scan line passing through the left-most vertex with the line joining the adjacent vertices of the polygon.

6. Apparatus for displaying a Gouraud shaded polygon on a raster-scanned graphics display device having an all-points-addressable refresh buffer for containing picture information, comprising means for calculating the intensities of pels lying on edges of the polygon and for loading such calculated edge pel intensity information within said buffer, and means for calculating the intensities of pels lying on scan lines defining said polygon and for storing said calculated scan line pel intensity information within said buffer, characterised in that said scan line pel intensity calculating means includes means for calculating the intensity gradient along one of said scan lines and for storing said calculated intensity gradient and means for using the stored intensity gradient to calculate the scan line pel intensities for other scan lines.

7. Apparatus as claimed in claim 6, further characterised in that said edge pel calculation means is arranged to calculate only the intensities of pels lying on leading edges or trailing edges of said polygon.

8. Apparatus as claimed in either claim 6 or claim 7, in which said edge pel and scan line pel intensity calculating means includes a programmed microprocessor having attached storage for storing the calculated edge intensities and the calculated intensity gradient.

9. Apparatus as claimed in claim 8, in which said microprocessor is used to generate the intensity information for each scan line pel by adding the intensity gradient to the stored edge pel intensities and to store the resulting picture information in said refresh buffer.

FIG. 1

FIG. 2

$$I_E = \left[ \frac{(Y_2 - Y_3)}{(Y_1 - Y_2)} \bullet (I_1 - I_3) \right] + I_3$$

$$X_E = \left[ \frac{(Y_2 - Y_3)}{(Y_1 - Y_2)} \bullet (X_1 - X_3) \right] + X_3$$

$$\Delta I = \frac{(I_E - I_2)}{(X_E - X_2)}$$

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | W.M. NEWMAN et al.: "Principles of Interactive Computer Graphics", 2nd edition, 1981, pages 389-410, Auckland McGraw-Hill, US<br>* Page 398, lines 20-27; figure 25.6 * | 1-7 | G 06 F 15/72 |
| | | | **TECHNICAL FIELDS SEARCHED (Int. Cl.4)** |
| | | | G 06 F 15/72 |

The present search report has been drawn up for all claims

| Place of search | Date of completion of the search | Examiner |
|---|---|---|
| THE HAGUE | 09-12-1987 | BURGAUD C. |

EPO FORM 1503 03.82 (P0401)